# EUROPEAN PATENT APPLICATION

(11) **EP 1 455 467 A1**
(43) Date of publication of application: **08.09.2004**
(21) Application number: 01274911.5
(22) Date of filing: 06.12.2001
(51) Int. Cl.: H04B 7/26

(54) **PORTABLE TERMINAL HAVING FUNCTION OF DETECTING APPROACH OF PERSON BY USING PROXIMITY WIRELESS COMMUNICATION MEANS, RECORDED MEDIUM USED FOR THE SAME, AND SERVER**

(71) Applicant: FUJITSU LIMITED, Kawasaki-shi, Kanagawa 211-8588 (JP)
(72) Inventor: KONDOU, Youichi, Kawasaki-shi, Kanagawa 211-8588 (JP); NINOMIYA, Teruhisa, Kawasaki-shi, Kanagawa 211-8588 (JP); IDANI, Shigehiro, Kawasaki-shi, Kanagawa 211-8588 (JP); YAMADA, Isamu, Kawasaki-shi, Kanagawa 211-8588 (JP)
(74) Representative: Hitching, Peter Matthew
(86) International application number: PCT/JP2001/010705
(87) International publication number: WO 2003/049326

(57) **Abstract**

A portable terminal includes a wireless public network communication portion for performing communication via a wireless public network, a short distance wireless communication portion for performing direct wireless communication with a terminal that exists within a short distance area, a communication history memory portion for storing a history of communication performed by using the wireless public network communication portion and a control portion for controlling each portion. The control portion searches other portable terminals that exist within the short distance area by using the short distance wireless communication portion, refers the communication history memory portion of each other with a found portable terminal, and informs a user of approach of the other end by using information means if there is a communication history with the other end exists in the communication history memory portion of each end.

## Description

### TECHNICAL FIELD

The present invention relates to a portable terminal having means for connecting to a wireless public network and short distance wireless communication means. More specifically, the present invention relates to a portable terminal having a function of detecting other person's approach utilizing short distance wireless communication means.

### BACKGROUND ART

Recently, portable terminals such as a cellular phone that uses wireless communication and a personal digital assistant (PDA) having a communication function have become widespread remarkably. Not only using these portable terminals for their original purpose as communication terminals but a method for using them for obtaining position information of the owner has been commercialized. For example, a PHS (Personal Handy Phone system) phone that is a simplified cellular phone and a global positioning system (GPS) can be used for the user who carries them to obtain his or her position information.

In addition, it may be convenient to obtain other person's position information such that a friend is close to the user adding to the information of his or her own position. The user can utilize such information of other person's position when waiting or searching a person or at other opportunities. There is a case it is convenient for the user to inform a third party that he or she is contacting (approaching) a specific person.

If the user wants to detect other person's approach by the position obtaining technique utilizing the PHS and the GPS, it is necessary to measure his or her own position and a position of the other person using the PHS and the GPS successively and to detect relative approach from both the obtained position information. Namely, since the information of other person's approach is obtained via a base station of the wireless communication, it is necessary to establish communication between the portable terminal and the base station successively. By this method, however, a lot of inquiries may be transmitted to the base station of wireless communication as the number of persons who want to know other person's approach increases, resulting in an excessive load of process in the base station or an excessive traffic on a communication path.

The present invention is to realize a function of detecting other person's approach and informing the user of the approach utilizing short distance wireless communication means for wireless communication between portable terminals that have the short distance wireless communication means adding to wireless communication means via a base station.

### DISCLOSURE OF THE INVENTION

According to a first aspect of the present invention, a portable terminal includes a wireless public network communication portion for performing communication via a wireless public network, a short distance wireless communication portion for performing direct wireless communication with a terminal that exists within a predetermined short distance area, a communication history memory portion for storing a history of communication performed by using the wireless public network communication portion, and a control portion for searching other portable terminals that exist within the short distance area by using the short distance wireless communication portion, referring the communication history memory portion of each other with a found portable terminal, and informing a user of approach of the other end by using information means if there is a communication history with the other end exists in the communication history memory portion of each end.

According to this structure, it is possible to detect a portable terminal of the other end with which communication such as telephone or exchange of electronic mails was performed via a wireless public network in the past exists within the short distance area by the short distance wireless communication portion so as to inform the user. This method is different from the conventional approach detection using a wireless public network via a base station and does not have a risk of increasing a load of process of the base station or traffic on a communication path.

It is possible to store an approach log including a device ID of the other end that has approached and time in an approach history memory portion together with the information to the user or instead of the information. It is possible to exchange and store a profile of the user or information necessary for establishing communication in the short distance wireless communication together with the device ID. Other various structures of the portable terminal according to the present invention will be explained later with reference to drawings.

In addition, a storage medium according to the present invention is equipped in a portable terminal including a wireless public network communication portion for performing communication via a wireless public network, a short distance wireless communication portion for performing direct wireless communication with a terminal that exists within a predetermined short distance area, and a control portion for searching other portable terminals that exist within the short distance area by using the short distance wireless communication portion and deciding whether or not a found portable terminal is an object of approach detection. At least one of a device ID of an object of the approach detection, a profile of the user, communication establishment information in the short distance wireless communication, a communication history and a decode key for encrypted communication history is stored in the storage medium.

In addition, a server according to the present invention is placed on a network that a portable terminal can access via a wireless public network. The server stores and manages at least one of a device ID of an object of approach detection that the portable terminal can download, a profile of a user thereof, communication establishment information in short distance wireless communication, a communication history and a decode key for encrypted communication history.

### BRIEF DESCRIPTION OF THE DRAWINGS

Fig. 1 is a block diagram of a portable terminal according to a first embodiment of the present invention.
Fig. 2 is a schematic diagram showing communication between portable terminals via a wireless public network.
Fig. 3 is a schematic diagram showing communication between portable terminals using short distance wireless communication.
Fig. 4 is a flowchart of a process concerning approach detection and information performed by a control portion of the portable terminal according to the first embodiment.
Fig. 5 is a block diagram of the portable terminal according to a second embodiment of the present invention.
Fig. 6 is a flowchart of a process concerning approach detection and information performed by the control portion of the portable terminal according to the second embodiment.
Fig. 7 is a block diagram of the portable terminal according to a third embodiment of the present invention.
Fig. 8 is a block diagram of an example of a system structure according to the third embodiment of the present invention.
Fig. 9 is a flowchart of a process concerning approach detection and information performed by the control portion of the portable terminal according to a fourth embodiment.

### BEST MODE FOR CARRYING OUT THE INVENTION

With reference to attached drawings, the present invention will be explained more in detail.

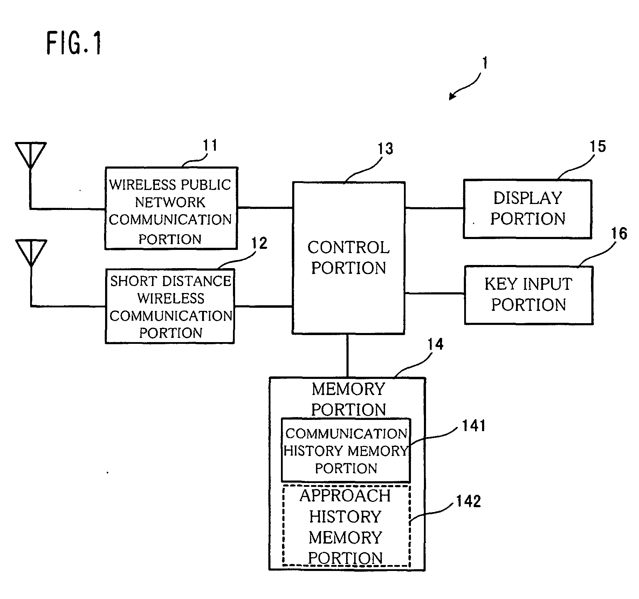

Fig. 1 is a block diagram of a portable terminal according to a first embodiment of the present invention. This portable terminal 1 includes a wireless public network communication portion 11 for performing communication such as telephone or an exchange of electronic mails with other portable terminals via a wireless public network and a short distance wireless communication portion 12 for performing wireless communication directly with other terminal that exists within a predetermined short distance area. The short distance wireless communication portion 12 is conformable to a standard of "Bluetooth" or IEEE802.11b.

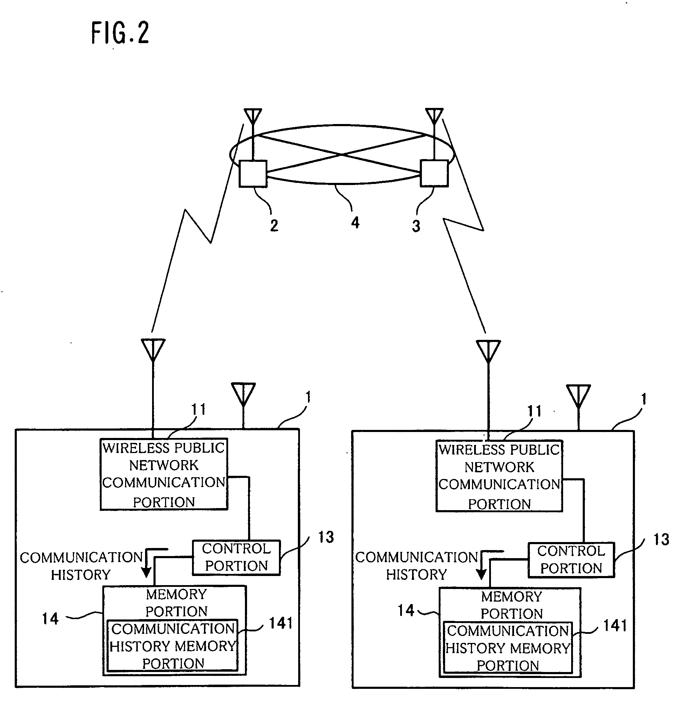

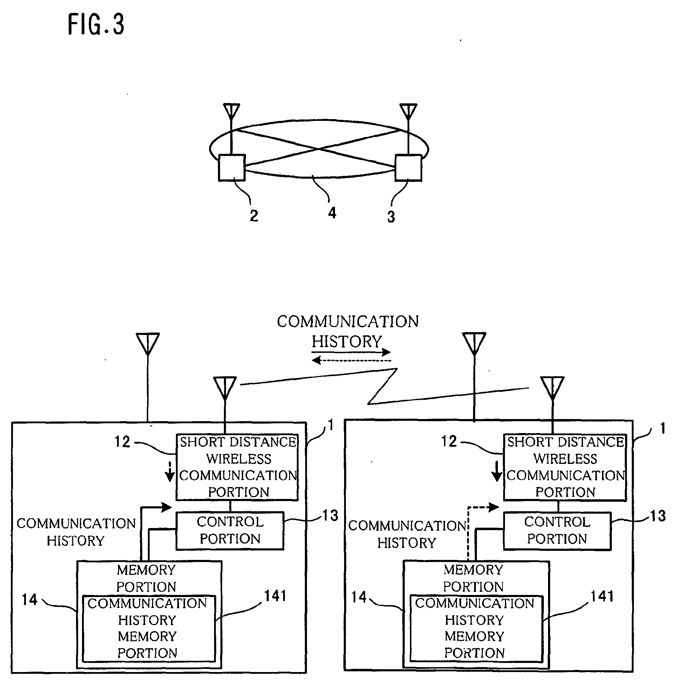

The portable terminal 1 also includes a control portion 13 using a microprocessor, a memory portion 14 using a semiconductor memory, a display portion 15 using a liquid display or others and a key input portion 16. The control portion 13 stores history of communications that were performed by the wireless public network communication portion 11 in a communication history memory portion 141 of the memory portion 14. This process is shown in Fig. 2 schematically. In Fig. 2, reference numerals 2 and 3 denote wireless base stations, while reference numeral 4 denotes the wireless public network. In addition, the control portion 13 searches other portable terminals that exist within the short distance area by using the short distance wireless communication portion 12, and looks up the communication history memory portion 141 of each other between found portable terminals. This process is shown in Fig. 3 schematically. Then, the control portion 13 informs the user of the other person's approach by using informing means when it is found that a history of communication with the other party exists in the communication history memory portions 141 of both sides. For example, a message informing the other party's approach is displayed on the display portion 15 as the informing means. Informing means using sound such as a buzzer or a speaker may be used for informing the user.

In addition, the control portions 13 exchange device IDs with each other when a history of communication with the other party exists in the communication history memory portions 141 of both sides, and store an approach log including a device ID of the other party with which device IDs were exchanged and a time when the exchange was performed in an approach history memory portion 142 of the memory portion 14.

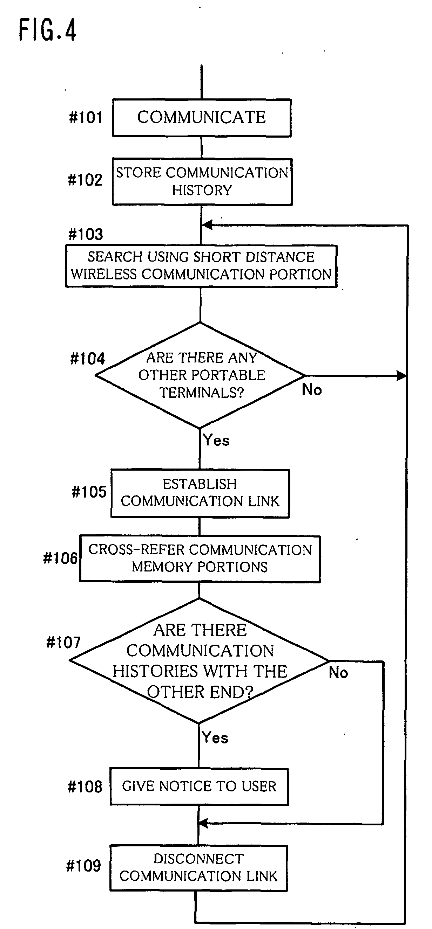

Fig. 4 is a flowchart of a process concerning approach detection and information performed by the control portion 13 of the portable terminal 1 according to the first embodiment. In Step #101, communication such as telephone or exchange of electronic mails is performed by using the wireless public network communication portion 11. Then, the control portion 13 stores a history of the communication in the communication history memory portion 141 of the memory portion 14 (Step #102). The communication history can contain a telephone number of the other end in the communication. In addition, from the viewpoint of protecting privacy of the user, it is desirable to store the telephone history after encrypting it. When encrypting the telephone history to be stored, a decode key is produced that is used for decoding the communication history.

The approach detection is performed for an object that is a portable terminal storing a telephone history. For approach detection, the control portion 13 searches other portable terminals that exist within the short distance area in which a communication is possible, by using the short distance wireless communication portion 12 in Step #103. If any other portable terminal is not found (No in Step #104), the process goes back to Step #103. If any other portable terminal is found (Yes in Step #104), a communication link is established with the portable terminal (Step #105), and the communication history memory portions 141 are referred by each other side (Step #106).

If a communication history with the other party is confirmed as a result of the cross reference of the communication history memory portions 141 (Yes in Step #107), the display portion 15 is used for informing the user (Step #108), and then the communication link is cut off (Step #109). If a communication history with the other party is not confirmed, the communication link is cut off promptly (Step #109). After this, the process goes back to Step #103 for searching other portable terminals.

Instead of the informing process in Step #108 or together with the informing process, it is possible to exchange device IDs with each other and to store the approach log including the device ID of the other end of the exchange and time in the approach history memory portion 142 of the memory portion 14. In addition, together with the approach log of the device ID and others, it is possible to store a user's profile of the other end or connection management information for the short distance wireless communication (for example, communication establishment information such as a link key for helping establishment of the communication link). Furthermore, it is preferable to equip the portable terminal 1 with means for limiting an access because there is a case where it is not proper to permit an access to the information such as a user profile without restriction.

Hereinafter, an example will be explained where the short distance wireless communication portion 12 utilizes Bluetooth technology. It is supposed that two portable terminals 1 performed communication such,as telephone or exchange of electronic mails via a wireless public network, and then they entered the area in which Bluetooth communication is possible with each other. First, one of them starts a polling process so as to establish a communication link between the two portable terminals 1. After that, the two portable terminals 1 provide a service for exposing the communication history to each other, so as to refer the communication history memory portion 141 of the other end. Thus, each of the terminals 1 checks whether or not the communication history memory portion 141 of the other end stores a history of communication with itself.

Then, if both the portable terminals 1 confirm that the communication history memory portion 141 of the other end stores a history of communication with itself, the display portion 15 is used for informing the user of the other end person. Alternatively, Bluetooth is used for storing a device ID, a user profile, connection management information (such as a link key) or others in the memory portion 14 (the approach history memory portion 142) between the two portable terminals 1.

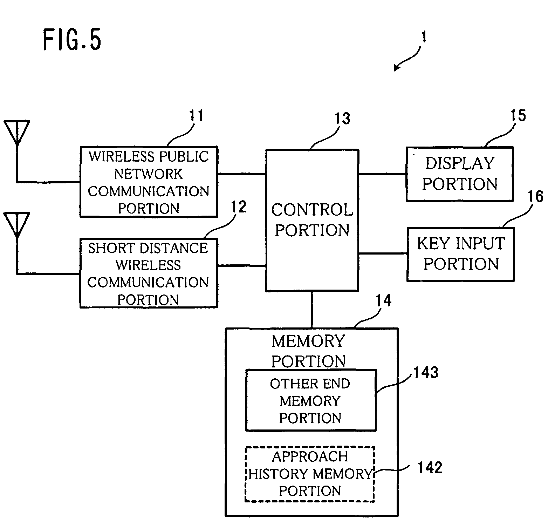

Fig. 5 is a block diagram of the portable terminal 1 according to a second embodiment of the present invention. This portable terminal 1 is different from the portable terminal 1 shown in Fig. 1 in that the memory portion 14 has an other end memory portion 143 instead of the communication history memory portion 141. In addition, a part of the process performed by the control portion 13 is different as explained below.

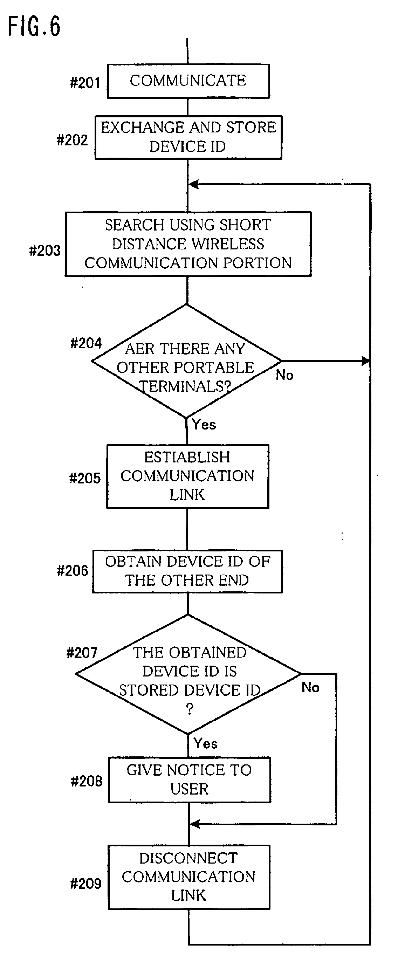

Fig. 6 is a flowchart of a process concerning approach detection and information performed by the control portion 13 of the portable terminal 1 according to the second embodiment. When communication such as telephone or exchange of electronic mails is performed by using the wireless public network communication portion 11 in Step #201, the control portion 13 exchanges the device ID with the portable terminal of the other end so as to store the device ID of the other end in the other end memory portion 143 of the memory portion 14 (Step #202).

The approach detection in this embodiment is performed for a portable terminal as an object that has the device ID stored in the other end memory portion 143. For the approach detection, the control portion 13 uses the short distance wireless communication portion 12 in Step #203 so as to search other portable terminals that exist within the short distance area in which communication is possible. If any other portable terminal is not found (No in Step #204), the process goes back to Step #203. If any other portable terminal is found (Yes in Step #204), a communication link is established with the portable terminal (Step #205), and the device ID of the other end is obtained (Step #206).

After that, it is checked whether or not the obtained device ID of the other end is stored in the other end memory portion 143 (Step #207). If it is stored, the display portion 15 is used for informing the user (Step #208), and then the communication link is cut off (Step #209). If it is not stored, the communication link is cut off promptly (Step #209). After that, the process goes back to Step #203 for searching other portable terminals.

Instead of the informing process in Step #208 or together with the informing process, it is possible to store the approach log that includes the device ID of the other end and time in the approach history memory portion 142 of the memory portion 14. In addition, a user profile of the other end person or connection management information for short distance wireless communication (for example communication establishment information such as a link key for helping establishment of the communication link) may be included in the approach history together with the device ID to be stored.

An example of the above-mentioned process will be explained where the short distance wireless communication portion 12 utilizes Bluetooth technology. It is supposed that two portable terminals 1 performed communication such as telephone or exchange of electronic mails via a wireless public network, and then they entered the area in which Bluetooth communication is possible with each other. A Bluetooth address can be used as the device ID that is exchanged and stored when communication is performed via the wireless public network (for example, when the telephone communication is finished). The Bluetooth address is determined uniquely to each short distance wireless communication device, so there is no wireless communication device having the same Bluetooth address. Therefore, a Bluetooth address and a portable terminal can have a one-to-one correspondence.

When the two portable terminals 1 that have exchanged the Bluetooth addresses as the device IDs enter the area in which Bluetooth communication is possible between them, communication link is established between the two portable terminals 1. The Bluetooth communication protocol has a step for obtaining a Bluetooth address of the other end during establishment of the communication link. Therefore, it is decided whether or not a communication was performed with the other end in the past by checking whether or not the Bluetooth address of the other end that was obtained in the step is stored in the other end memory portion 143. If it is stored in the other end memory portion 143, the user is informed.

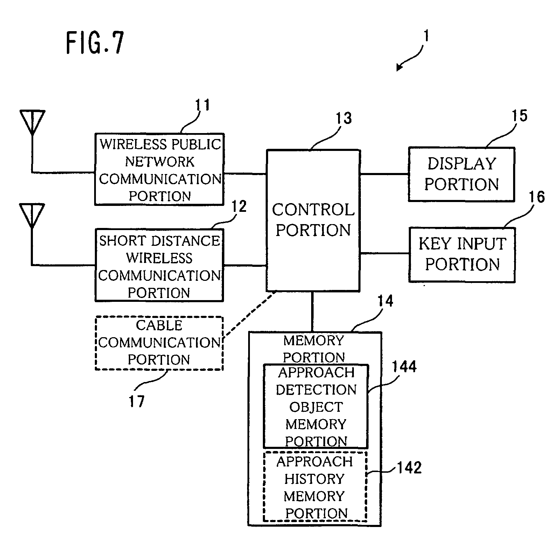

Fig. 7 is a block diagram of the portable terminal 1 according to a third embodiment of the present invention. This portable terminal 1 is different from the portable terminal 1 shown in Fig. 1 in that the memory portion 14 has an approach detection object memory portion 144 instead of the communication history memory portion 141. In addition, a part of the process performed by the control portion 13 is different as explained below.

In the above-explained second embodiment, the control portion 13 stores the device ID of the other end when performing communication using the wireless public network communication portion 11, and the portable terminal having the stored device ID becomes an object of the approach detection. In other words, the portable terminal with which communication such as telephone or exchange of electronic mails was performed in the past becomes an object of the approach detection. In the third embodiment, in contrast, a device ID of a portable terminal to be an object of the approach detection is stored in the approach detection object memory portion 144 of the memory portion 14 in advance without considering records of communications in the past. The portable terminal 1 obtains a list of device IDs of portable terminals to be objects of the approach detection by using various methods and store the list in the approach detection object memory portion 144.

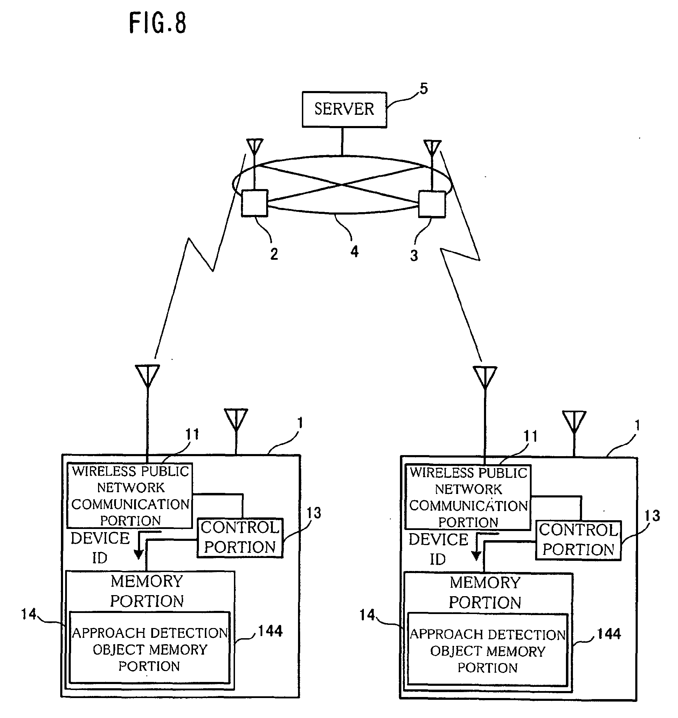

As shown in Fig. 8, for example, the wireless public network communication portion 11 may be used for structuring a system for downloading the list of device IDs of portable terminals to be objects of the approach detection from a server 5 on the Internet. Alternatively, a system can be structured in which the short distance wireless communication portion 12 or an optional cable communication portion 17 or infrared communication means may be used for downloading the list of device IDs of portable terminals to be objects of the approach detection from a server that is connected to a local area network (LAN). Still another method is possible in which the list of device IDs of portable terminals to be objects of the approach detection is stored in a removable storage medium such as a flash memory card, and after that the removable storage medium is attached to the portable terminal 1 as the memory portion 14 or the approach detection object memory portion 144. The subsequent approach detection process is the same as that in the second embodiment.

Furthermore, the above-mentioned memory portion (including the removable storage medium) 14 can store not only the device IDs (the list thereof) of the objects of the approach detection but also a profile of the user, the communication establishment information of the short distance wireless communication, the communication history and the decode key for the encrypted communication history.

In addition, as a fourth embodiment, it is possible to structure as follows. Instead of downloading the list of device IDs of portable terminals to be objects of the approach detection that is stored and managed by the server 5 in Fig. 8 and storing the same in the approach detection object memory portion 144, the control portion 13 inquires the server 5 whether or not a device ID of a found portable terminal is the object of the approach detection in the approach detection process.

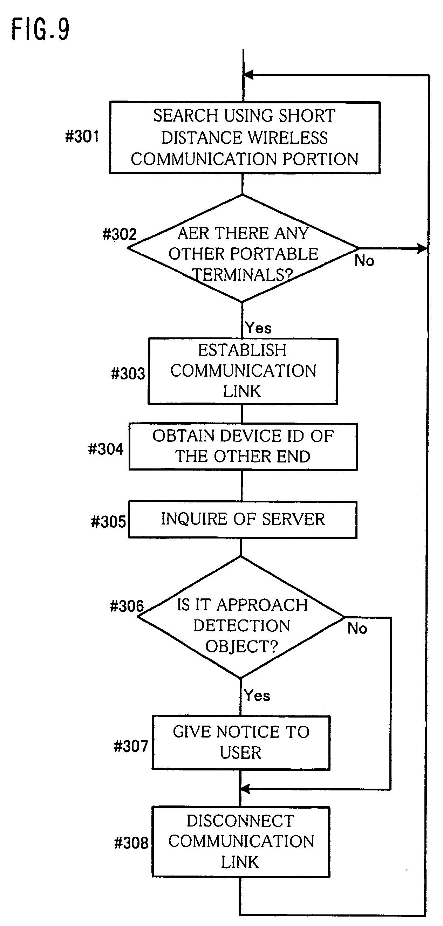

Fig. 9 is a flowchart of a process concerning approach detection and information performed by the control portion 13 of the portable terminal 1 according to the fourth embodiment. For the approach detection, the control portion 13 uses the short distance wireless communication portion 12 in Step #301 so as to search other portable terminals that exist within the short distance area in which communication is possible. If any other portable terminal is not found (No in Step #302), the process goes back to Step #301. If any other portable terminal is found (Yes in Step #302), a communication link is established with the portable terminal (Step #303), and a device ID of the other end is obtained (Step #304).

Then, it is asked to the server 5 whether or not the obtained device ID belongs to the portable terminal that is an object of the approach detection by using the wireless public network communication portion 11 (Step #305). As a result, if it is the device ID of the approach detection object (Yes in Step #306), the display portion 15 is used for informing the user (Step #307). After that, the communication link is disconnected (Step #308). If it is not the device ID of an object of the approach detection (No in Step #306), the communication link is disconnected promptly (Step #308). After this, the process goes back to Step #301 for searching other portable terminals.

Instead of the informing process in Step #307 or together with the informing process, it is possible to store an approach log including the device ID of the other end and time in the approach history memory portion 142 of the memory portion 14.

It is possible to structure a system including the above-mentioned server 5 on the Internet that stores and manages not only the device IDs (the list thereof) of objects of the approach detection but also a profile of the user, the communication establishment information of the short distance wireless communication, the communication history and the decode key for the encrypted communication history. In this case, it is not necessary that each portable terminal 1 stores the above-mentioned information in the memory portion 14. In other words, necessary information can be obtained by accessing the server 5 by using the wireless public network communication portion 11 when it becomes necessary in the same way as the device IDs of objects of the approach detection.

In addition, it is also possible to manage the approach history that includes device IDs, user profiles and others by the server 5 on the network so as to utilize the approach history in Groupware that works on each portable terminal 1 and a personal computer connected to the network. For example, an application is possible in which a second person is informed of approach of a first person by e-mail so that the second person can see an activity record of the first person.

In addition, it is desirable that the control portion 13 execute the approach detection process by using the short distance wireless communication portion 12 at a variable execution interval. When the execution interval is shortened, the approach detection can be done more in detail though power consumption of the short distance wireless communication portion 12 increases so that the battery in the portable terminal 1 may run down in a short time. On the contrary, when the execution interval is lengthened, the approach detection is done roughly though power consumption of the short distance wireless communication portion 12 decreases so that the battery runs longer. For example, the polling interval of Bluetooth communication is adjusted so that the execution interval of the approach detection can be variable.

In addition, it is also preferable that intensity of radio wave that is transmitted from the short distance wireless communication portion 12, i.e., a transmission power be variable. When the transmission power of the short distance wireless communication portion 12 is increased, the distance area for the approach detection is widened. On the contrary, when the transmission power of the short distance wireless communication portion 12 is decreased, the distance area for the approach detection is narrowed. Thus, the distance area for the approach detection can be adjusted to an appropriate area.

Although the present invention is explained above by using various embodiments and variations thereof, the present invention is not limited to these embodiments and variations but can be embodied in various ways.

### INDUSTRIAL APPLICABILITY

As explained above, the portable terminal according to the present invention detects approach of other person by utilizing short distance wireless communication means and informs the user. Therefore, it is different from the conventional approach detection using a wireless public network via a base station and is useful because there is not a risk of increasing a load of process of the base station or traffic on a communication path.

## Claims

1. A portable terminal comprising:
a wireless public network communication portion for performing communication via a wireless public network;
a short distance wireless communication portion for performing direct wireless communication with a terminal that exists within a predetermined short distance area;
a communication history memory portion for storing a history of communication performed by using the wireless public network communication portion; and
a control portion for searching other portable terminals that exist within the short distance area by using the short distance wireless communication portion, referring the communication history memory portion of each other with a found portable terminal, and informing a user of approach of the other end by using information means if there is a communication history with the other end exists in the communication history memory portion of each end.

2. A portable terminal comprising:
a wireless public network communication portion for performing communication via a wireless public network;
a short distance wireless communication portion for performing direct wireless communication with a terminal that exists within a predetermined short distance area;
a communication history memory portion for storing a history of communication performed by using the wireless public network communication portion;
a control portion for searching other portable terminals that exist within the short distance area by using the short distance wireless communication portion, referring the communication history memory portion of each other with a found portable terminal, and exchanging device IDs of each other if there is a communication history with the other end exists in the communication history memory portion of each end; and
an approach history memory portion for storing an approach log that includes a device ID of the other end of exchange and time in accordance with an instruction from the control portion.

3. A portable terminal comprising:
a wireless public network communication portion for performing communication via a wireless public network;
a short distance wireless communication portion for performing direct wireless communication with a terminal that exists within a predetermined short distance area;
an other end memory portion for storing a device ID of the other end when performing communication by using the wireless public network communication portion; and
a control portion for searching other portable terminals that exist within the short distance area by using the short distance wireless communication portion, and informing a user of approach of the other end by using information means if there is the device ID of a found portable terminal in the other end memory portion.

4. A portable terminal comprising:
a wireless public network communication portion for performing communication via a wireless public network;
a short distance wireless communication portion for performing direct wireless communication with a terminal that exists within a predetermined short distance area;
an other end memory portion for storing a device ID of the other end when performing communication by using the wireless public network communication portion;
a control portion for searching other portable terminals that exist within the short distance area by using the short distance wireless communication portion, and delivering an approach log that includes a device ID of a found portable terminal and time if the device ID exists in the other end memory portion; and
an approach history memory portion for storing the approach log in accordance with an instruction from the control portion.

5. A portable terminal comprising:
a wireless public network communication portion for performing communication via a wireless public network;
a short distance wireless communication portion for performing direct wireless communication with a terminal that exists within a predetermined short distance area;
an approach detection object memory portion for storing device IDs of other portable terminals to be objects of approach detection information in advance; and
a control portion for searching other portable terminals that exist within the short distance area by using the short distance wireless communication portion, and informing a user of approach of the other end by using information means if there is the device ID of a found portable terminal in the approach detection object memory portion.

6. A portable terminal comprising:
a wireless public network communication portion for performing communication via a wireless public network;
a short distance wireless communication portion for performing direct wireless communication with a terminal that exists within a predetermined short distance area;
an approach detection object memory portion for storing device IDs of other portable terminals to be objects of approach detection information in advance;
a control portion for searching other portable terminals that exist within the short distance area by using the short distance wireless communication portion, and delivering an approach log that includes a device ID of a found portable terminal and time if the device ID exists in the approach detection object memory portion; and
an approach history memory portion for storing the approach log in accordance with an instruction from the control portion.

7. A portable terminal comprising:
a wireless public network communication portion for performing communication via a wireless public network;
a short distance wireless communication portion for performing direct wireless communication with a terminal that exists within a predetermined short distance area; and
a control portion for searching other portable terminals that exist within the short distance area by using the short distance wireless communication portion, inquiring of a server whether or not a device ID of a found portable terminal is an object of approach detection by using the wireless public network communication portion, and informing a user of approach of the other end by using information means if it is an object of the approach detection.

8. A portable terminal comprising:
a wireless public network communication portion for performing communication via a wireless public network;
a short distance wireless communication portion for performing direct wireless communication with a terminal that exists within a predetermined short distance area;
a control portion for searching other portable terminals that exist within the short distance area by using the short distance wireless communication portion, inquiring of a server whether or not a device ID of a found portable terminal is an object of approach detection by using the wireless public network communication portion, and delivering an approach log that includes a device ID of a found portable terminal and time if it is an object of the approach detection; and
an approach history memory portion for storing the approach log in accordance with an instruction from the control portion.

9. The portable terminal according to any one of claims 1 through 8, wherein a profile of a user is exchanged and stored together with the device ID.

10. The portable terminal according to any one of claims 1 through 8, wherein information that is necessary for establishing communication in the short distance wireless communication is exchanged and stored together with the device ID.

11. The portable terminal according to claim 9 or 10, further comprising means for limiting an access to the information that is exchanged and stored.

12. The portable terminal according to claim 1 or 2, wherein the communication history memory portion stores the communication history after encrypting the same and has a decode key for decoding the communication history with the other end in communication.

13. The portable terminal according to any one of claims 1 through 12, wherein the control portion executes the process of searching other portable terminals that exist within the short distance area by using the short distance wireless communication portion at a variable execution interval.

14. The portable terminal according to any one of claims 1 through 12, wherein the short distance wireless communication portion adjusts a transmission power so that the short distance area can be variable.

15. A storage medium that is equipped in a portable terminal including a wireless public network communication portion for performing communication via a wireless public network, a short distance wireless communication portion for performing direct wireless communication with a terminal that exists within a predetermined short distance area, and a control portion for searching other portable terminals that exist within the short distance area by using the short distance wireless communication portion and deciding whether or not a found portable terminal is an object of approach detection, wherein
at least one of a device ID of an object of the approach detection, a profile of a user, communication establishment information in the short distance wireless communication, a communication history and a decode key for encrypted communication history is stored in the storage medium.

16. A server on a network that a portable terminal can access via a wireless public network, wherein
the server stores and manages at least one of a device ID of an object of approach detection that the portable terminal can download, a profile of a user thereof, communication establishment information in short distance wireless communication, a communication history and a decode key for encrypted communication history.
